# EUROPEAN PATENT SPECIFICATION

(11) **EP 3 230 232 B1**
(45) Date of publication and mention of the grant of the patent: **15.08.2018**
(21) Application number: 14835725.4
(22) Date of filing: 10.12.2014
(51) Int. Cl.: C04B 35/20, C04B 35/626, C04B 35/63, C04B 35/632, C04B 35/634, C04B 35/64

(54) **PRODUCTION METHOD OF STEATITE CERAMICS WITH IMPROVED ELECTRICAL PROPERTIES**
HERSTELLUNGSVERFAHREN VON STEATITKERAMIK MIT VERBESSERTEN ELEKTRISCHEN EIGENSCHAFTEN
PROCESSUS DE PRÉPARATION DES CÉRAMIQUES EN STÉATITE AVEC DES MEILLEURES PROPRIÉTÉS ÉLECTRIQUES

(43) Date of publication of application: 18.10.2017
(73) Proprietor: Institut "Jozef Stefan", 1000 Ljubljana (SI); Razvojni Center eNem Novi Materiali d.o.o., 1410 Zagorje ob Savi (SI)
(72) Inventor: RAMSAK, Irena, 1412 Kisovec (SI); RAZPOTNIK, Marija, 1411 Izlake (SI); MAKOVSEK, Katja, 2317 Oplotnica (SI); KUSCER HROVATIN, Danjela, 1000 Ljubljana (SI); DRNOVSEK, Silvo, 1000 Ljubljana (SI); HOLC, Janez, 1234 Menges (SI)
(74) Representative: Macek, Gregor
(86) International application number: PCT/SI2014/000074
(87) International publication number: WO 2016/093771

(56) References cited:
- GB-A- 866 773
- SI-A- 20 689
- HASAN GKE ET AL: "Characterization of microstructural and thermal properties of steatite/cordierite ceramics prepared by using natural raw materials", JOURNAL OF THE EUROPEAN CERAMIC SOCIETY, vol. 31, no. 14, 31 December 2010 (2010-12-31), pages 2741-2747, XP028262011, ISSN: 0955-2219, DOI: 10.1016/J.JEURCERAMSOC.2010.12.007 [retrieved on 2010-12-10]
- Gerald Vogt: ""3.1.3 Steatit"" In: Wolfgang Kollenberg: "Technische Keramik; Grundlagen, Werkstofe, Verfahrenstechnik. 2 Auflage", 30 November 2009 (2009-11-30), VULKAN VERLAG, Essen (DE), XP002737502, ISBN: 978-3-8027-2927-7 pages 188-191, Page 189, left column, line 13 to the end; page 190, lines 1- 15.

## Description

The object of the invention is a process for producing alkaline steatite ceramics having controlled electrical properties for electrotechnology. Alkaline steatite ceramics of the invention belongs to a group of magnesium silicates of C 220 type. Steatite ceramics is an electrical insulator with a relatively low electrical conductivity at increased temperature.

It is used in electrotechnology for fabrication of parts of electrical devices, such as housings of switches, thermostats and fuses. The ceramics must therefore exhibit good mechanical properties and a relatively high electrical resistance at increased temperature. Steatite ceramics properties are defined in Standard IEC 60672-3, Ceramic and glass-insulating materials. Steatite ceramics belongs to a subgroup of magnesium silicates C 200. The invention discloses a material from subgroup C 200 which is dense magnesium silicate based steatite ceramics. Standard required values for specific electrical resistance at 200 °C are 1 x 10⁸ Ohm m, at 600 °C 1 x 10³ Ohm m. An extrapolated value at 400 °C is 2.9 x 10⁵ Ohm m. Requirements for steatite ceramics of C 220 type are more reproducible and controlled fabrication of ceramics and improved properties, especially higher electrical resistance.

Alkaline steatite ceramics are produced from natural materials. These materials do not contain substances that are harmful to the environment but the properties of the materials that are important for the production of ceramics are not constant and depend on the place of finding, excavation site and subsequent processing of materials such as crushing, grinding and sieving. The method for the production of ceramics must be adapted accordingly in order to obtain the required and reproducible properties.
The goal of the invention is to produce steatite ceramics from natural materials that would have reproducible and high electrical resistance at an increased temperature. The method of the invention is used to produce steatite ceramics from natural materials with electrical resistance that corresponds to the predetermined value for non-alkaline steatite ceramics according to standard C 221 which is produced from natural and synthetic materials. An example of a synthetic material is barium carbonate which is an environmentally harmful substance. This ceramics has a standard required specific electrical resistance at 200 °C 1 x 10⁹ Ohm m, at 600 °C 1 x 10⁵ Ohm m, the extrapolated value at 400 °C is 1 x 10⁷ Ohm m.
Available literature from the field of preparation and properties of steatite ceramics contains few data that would describe the influence of natural materials on electrical properties of ceramics. Patent US 4687749 discloses preparation of steatite based glass-ceramics. Crystallization of steatite glass at different temperatures was studied. They reported on mechanical properties of the obtained glass-ceramics with a predominantly steatite phase. Patent US 5108665 discloses a method for the preparation of pure and dense steatite ceramics. Powder was prepared by a thermal decomposition of organometallic compounds and sintered at a temperature up to 1450 °C. The influence of various parameters on density of steatite ceramics was studied. Synthetic materials were an origin in both mentioned patents. Grinding of materials in water for the preparation of steatite ceramics is disclosed in patents CN 103952121 and CN 103923606. The first patent discloses a grinding method, wherein the quantity of water needed for grinding is reduced by an addition of suitable additives which results in energy saving for drying of the material. The second patent reports on a reduced time for grinding materials in water. The additives reduced the grinding time by one third. Influence of additives on the preparation of steatite ceramics is described in patent SI 20689 A. The patent discloses a material and a method for the production of steatite ceramics from predominantly natural materials having a low factor of dielectric losses and low leakage currents. None of the patents reports on the influence of a chemical composition of steatite ceramics on electrical properties.

Steatite ceramics products are mostly fabricated from natural materials that are ground and homogenised in water and then formed in their raw state by using various ceramic technological processes, finally blanks are fired at high temperatures. Firing is performed at temperatures around 1300 °C. During a firing process, chemical reactions, phase conversions take place, a glass phase and crystalline phases occur. The quantity of magnesium silicate which is the main crystalline phase in steatite ceramics depends on the materials used, the temperature and time of firing. Mineralogical composition of fired steatite ceramics is magnesium silicate and glass phase, whereas quartz and other crystalline forms of silicon oxide can also be present in small quantities. Usual materials for the preparation of steatite ceramics of C 220 type are natural materials such as talc, clay components (clays, bentonites) and feldspar. Clay components provide for plastic forming of the suspension. During firing process the talc is disintegrated to magnesium silicate and silicon oxide. The clay components and feldspars form the liquid phase which coats magnesium silicate granules and causes densification of steatite ceramics.

The task and goal of the invention is a method for producing such steatite ceramics of C 220 type that will have the characteristics required by standard C 220 and controlled and reproducible high electrical resistance, i. e. the electrical resistance as required by the standard for non-alkaline ceramics of C 221 type.

The task is solved by the invention by steatite ceramics and a production method, in which bentonite is partly or completely replaced by kaolin, wherewith electrical resistance of steatite ceramics is controlled and increased.

The starting material, i. e. a mixture for the preparation of steatite ceramics of the invention, contains the following ingredients in % by weight:
- 78 to 88 % of talc
- 0.1 to 10 % of a bentonite-kaolin mixture wherein in the bentonite-kaolin mixture, 1 to 100% of bentonite is replaced by kaolin
- 1 to 10 % of clay
- 0 to 8 % of dolomite
- 0 to 7 % of surfactants e. g. polyphosphates, polyacrylates, lignosulphonates, and binders e. g. polyvinyl alcohol, polyethylene glycol, polyvinyl butyral. The total content of iron oxide impurity in the starting material is up to 1.5 % by weight.

According to the method of the invention, the starting material is ground in a ceramic mill coated with Al₂O₃ or ZrO₂ ceramic coating and containing beads from the same material as the ceramic coating. Grinding is performed for 1 to 20 hours to reach an average particle size below 10 micrometres. Particle size is controlled by a laser granulometer. After the grinding, part of the water is removed from the suspension, the suspension is poured onto a dry plaster surface where it is left to dry up to a water content of 15 to 35 % by weight, or the suspension is dried in a drier at 105 °C. After drying, the water content in the ceramic material should be 15 to 35 % by weight to allow for forming of products in an extruder. The blanks are dried in a drier at 105 °C for 10 to 24 hours to reach the final content of water of 1 % by weight or less. The blanks are fired at a temperature between 1280 and 1340 °C for 1 hour to 10 hours, so that steatite ceramics of the invention is obtained. While fired, the blanks are in a vertical or horizontal position. After the firing is completed, the products have their final shape and dimensions.

Alkaline steatite ceramics with bentonite without added kaolin has specific electrical resistance at 400 °C 1.4 x 10⁶ Ohm m. Steatite ceramics of the invention, in which bentonite is partly or completely replaced by kaolin, has a higher specific electrical resistance at 400 °C, specific electrical resistance at 400 °C is more than 1 x 10⁸ Ohm m when the complete content of bentonite is replaced by kaolin.

### Embodiment 1 given as a comparative, useful for understanding the invention

Ingredients that contain natural humidity: talc (2409 g), clays (210 g), bentonite (148 g) and dolomite (145 g) are added to a grinder, water and additives (surfactants, binder) (73 g) are added, such that the final suspension has a dry matter/water mass ratio 62/38. The mixture is ground for 6 hours or until an average granule size of 6 micrometres is reached. After the grinding is completed, the suspension is poured onto a dry plaster surface. Test blanks are formed from the mass, they are dried at a temperature of 105 ° for a sufficient time to contain less than 1 % of humidity and then fired at a temperature of 1319 °C for 2 hours. The fired test blanks have a bending strength of 150 MPa and specific electrical resistance at 400 °C 1.4 x 10⁶ Ohm m.

### Embodiment 2

Ingredients that contain natural humidity: talc (2424 g), clays (181 g), kaolin (149 g), bentonite (91 g) and dolomite (58 g) are added to a grinder, water and additives (surfactants, binder) (84 g) are added, such that the final suspension has a dry matter/water mass ratio 62/38. The mixture is ground for 6 hours or until an average granule size of 5.8 micrometres is reached. After the grinding is completed, the suspension is poured onto a dry plaster surface. Test blanks are formed from the mass, they are dried at a temperature of 105 ° for a sufficient time to contain less than 1 % of humidity and then fired at a temperature of 1319 °C for 2 hours. The fired test blanks have a bending strength of 155 MPa and specific electrical resistance at 400 °C 4.2 x 10⁶ Ohm m.

### Embodiment 3

Ingredients that contain natural humidity: talc (2424 g), clays (181 g), kaolin (149 g) and dolomite (149 g) are added to a grinder, water and additives (surfactants, binder) (84 g) are added, such that the final suspension has a dry matter/water mass ratio 62/38. The mixture is ground for 6 hours or until an average granule size of 5.8 micrometres is reached. After the grinding is completed, the suspension is poured onto a dry plaster surface. Test blanks are formed from the mass, they are dried at a temperature of 105 ° for a sufficient time to contain less than 1 % of humidity and then fired at a temperature of 1306 °C for 2 hours. The fired test blanks have a bending strength of 147 MPa and specific electrical resistance at 400 °C more than 1 x 10⁸ Ohm m.

### Embodiment 4

Ingredients that contain natural humidity: talc (83.5 g), clays (6.2 g), kaolin (5.15 g) and dolomite (5.14 g) are added to a grinder and water is added so that the final suspension has a dry matter/water mass ratio 50/50. The mixture is ground for 2 hours or until an average granule size of 4.5 micrometres is reached. After the grinding, the suspension is dried at a temperature of 105 °C. Test blanks are formed from the mass and then fired at a temperature 1300 °C for 2 hours. The fired test blanks have specific electrical resistance at 400 °C more than 1 x 10⁸ Ohm m.

## Claims

1. Method for producing steatite ceramics with improved electrical properties **characterized in that** it includes:
- wet grinding of mixtures of starting ingredients in % by weight:
- 78 to 88 % of talc
- 0.1 to 10 % of a bentonite-kaolin mixture wherein in the bentonite-kaolin mixture, 1 to 100 % of bentonite is replaced by kaolin
- 1 to 10 % of clay - 0 to 8 % of dolomite
- 0 to 7 % of surfactants and binders
- the content of iron oxide in the starting material is up to 1.5 % by weight;
- wherein the grinding is done from 1 hour to 20 hours up to an average particle size below 10 micrometres and grinding of said mixture is carried out in a ceramic mill coated with Al₂O₃ or ZrO₂ ceramic coating and contains beads from the same material as the ceramic coating;
- after the grinding, the suspension is dried at 105 °C or poured onto a dry plaster surface where it is left to dry up to a water content of 15 to 35 % by weight, from which blanks are made;
- drying of blanks in a drier at 105 °C for 10 to 24 hours, such that they contain less than 1 % by weight of humidity;
- firing of blanks at a temperature of 1280 to 1340 °C for 1 hour to 10 hours.

## Patentansprüche

1. Verfahren zur Herstellung von Steatit-Keramiken mit verbesserten elektrischen Eigenschaften, **dadurch gekennzeichnet, dass** es umfasst:
- Nassvermahlung von Mischungen von Ausgangsbestandteilen in Gew.-%:
- 78 bis 88% Talkum
- 0,1 bis 10% einer Bentonit-Kaolin-Mischung, wobei in der Bentonit-Kaolin-Mischung, 1 bis 100% Bentonit durch Kaolin ersetzt wird
- 1 bis 10% Ton - 0 bis 8% Dolomit
- 0 bis 7% Tenside und Bindemittel
- der Gehalt an Eisenoxid im Ausgangsmaterial beträgt bis zu 1,5 Gew.-%;
- wobei das Vermahlen von 1 Stunde bis zu 20 Stunden bis zu einer mittleren Partikelgröße von unter 10 Mikrometer erfolgt und das Vermahlen dieser Mischung in einer mit Al₂O₃- oder ZrO₂-Keramikbeschichtung beschichteten keramischen Mühle, die Kugeln aus dem gleichen Material wie die keramische Beschichtung enthält, durchgeführt wird;
- nach dem Vermahlen wird die Suspension bei 105°C getrocknet oder auf eine trockene Gipsoberfläche gegossen, wo sie bis zu einem Wassergehalt von 15 bis 35 Gew.-% getrocknet wird, woraus Rohlinge hergestellt werden;
- Trocknen der Rohlinge in einem Trockner bei 105°C für 10 bis 24 Stunden, so dass sie weniger als 1 Gew.-% Feuchtigkeit enthalten;
- Brennen der Rohlinge bei einer Temperatur von 1280 bis 1340°C für 1 Stunde bis 10 Stunden.

## Revendications

1. Procédé de fabrication de vitrocéramiques à propriétés électriques améliorées **caractérisé en ce qu'**il comprend :
- broyage humide de mélanges d'ingrédients de départ en % en poids :
- 78 à 88 % de talc
- 0,1 à 10 % d'un mélange bentonite-kaolin, dans ledit mélange bentonite-kaolin 1 à 100 % de bentonite est remplacé par du kaolin
- 1 à 10 % d'argile
- 0 à 8 % de dolomite
- 0 à 7 % de tensioactifs et liants
- la teneur en oxyde de fer dans le matériau de départ est jusqu'à 1,5 % en poids ;
- le broyage étant effectué pendant 1 heure à 20 heures pour atteindre une dimension de particules moyenne inférieure à 10 micromètres et le broyage dudit mélange étant éffectué dans un broyeur en céramique qui est revêtu d'un revêtement céramique d'Al₂O₃ ou de ZrO₂ et contient des billes à partir du même matériau que le revêtement céramique ;
- après le broyage, la suspension est séchée à 105 °C ou versée sur une surface de plâtre sèche où elle est laissée à sécher jusqu'à atteindre une teneur en eau de 15 à 35 % en poids, à partir de laquelle des ébauches sont fabriquées ;
- séchage d'ébauches dans un séchoir à 105 °C pendant 10 à 24 heures, de telle sorte qu'elles contiennent moins de 1 % en poids d'humidité ;
- cuisson d'ébauches à une température de 1280 à 1340 °C pendant 1 heure à 10 heures.
